# EUROPÄISCHE PATENTANMELDUNG

(11) **EP 4 764 410 A2**
(43) Veröffentlichungstag der Anmeldung: **24.06.2026**
(21) Anmeldenummer: 25215008.1
(22) Anmeldetag: 11.11.2025
(51) Int. Cl.: G01C 21/00, G01C 21/30, B61L 25/02

(54) **BENCHMARKING VON FAHRZEUG-LOKALISIERUNGSSYSTEMEN**

(30) Priorität: 19.12.2024 DE 102024212181
(71) Anmelder: Siemens Mobility GmbH, 80997 München (DE)
(72) Erfinder: Schnapka, Thomas, 47829 Krefeld (DE); Winklhofer, Max Benedikt, 80993 München (DE); Schönbrunn, Malte, 76131 Karlsruhe (DE); Waschulzik, Thomas, 91058 Erlangen (DE)
(74) Vertreter: Siemens Patent Attorneys

(57) **Zusammenfassung**

Die vorliegende Erfindung betrifft ein Verfahren und System zur Bewertung und zum Vergleich von Fahrzeug-Lokalisierungssystemen. In einem Schritt werden Kartendaten bereitgestellt, die eine Umgebung des Fahrzeugs repräsentieren. Mittels zumindest eines Umgebungssensors des Fahrzeugs werden Umgebungswahrnehmungsdaten erfasst, wobei diese Daten zumindest ein Umgebungselement in der Fahrzeugumgebung bestimmen. Die erfassten Umgebungswahrnehmungsdaten werden mit den Kartendaten kombiniert, um Lokalisierungsdaten des zumindest einen Umgebungselements in einem gemeinsamen Koordinatensystem zu bestimmen. Anschließend werden Referenzlokalisierungsdaten des zumindest einen Umgebungselements in dem gemeinsamen Koordinatensystem bestimmt. Durch Bestimmen einer Abweichung zwischen den Lokalisierungsdaten und den Referenzlokalisierungsdaten wird eine Metrik für die Genauigkeit von Perception-Map-Fusion-Techniken bereitgestellt.

## Beschreibung

### TECHNISCHES GEBIET

Die vorliegende Offenbarung betrifft das Gebiet der Fahrzeugtechnik, insbesondere den Vergleich und die Bewertung von Umgebungswahrnehmungs- und Lokalisierungssystemen für Fahrzeuge unter Verwenden von Perception-Map-Fusion-Techniken, um Sensordaten und digitale Kartendaten zur Positionsbestimmung und Umgebungserfassung zu kombinieren.

### TECHNISCHER HINTERGRUND

Die zunehmende Automatisierung von Fahrzeugen, insbesondere im Schienenverkehr, erfordert eine präzise Lokalisierung. Für Aufgaben wie genaues Anhalten oder Zugsicherungssysteme ist die exakte Kenntnis der Position und Orientierung (Pose) des Fahrzeugs wichtig. Dies ist besonders kritisch bei der Fusion von Informationen aus digitalen Karten mit Daten von Umgebungssensoren des Fahrzeugs, auch als Perception-Map-Fusion (Wahrnehmungs-Karten-Fusion) bezeichnet.

Bei Perception-Map-Fusion-Techniken erfolgt eine Registrierung zwischen dem Koordinatensystem der Wahrnehmung und dem Kartenkoordinatensystem. Die räumliche Beziehung zwischen Kartenelementen und Umgebungselementen soll präzise bestimmt werden. Beispielsweise ist bei einem Hinderniserkennungssystem für Schienenfahrzeuge die genaue Lokalisierung entscheidend, um zu bestimmen, ob ein erkanntes Objekt auf oder neben den Gleisen liegt.

Die Durchführung von Perception-Map-Fusion-Techniken basiert auf einer kinematischen Kette, wobei jeder Übergang in dieser Kette eine potenzielle Fehlerquelle darstellt. Bisher wurden Anforderungen und Metriken für jeden Übergang individuell definiert, ohne das Gesamtsystem zu berücksichtigen.

Ein zentrales Element dieser kinematischen Kette ist die Geo-Lokalisierung des Fahrzeugs, die typischerweise durch Fusion mehrerer Sensoren erfolgt, wobei satellitenbasierte Lokalisierung (Global-Navigation-Satellite-System, GNSS) oft als einzige absolute Positionsreferenz dient. Die Bewertung der Leistungsfähigkeit solcher GNSS-IMU-Kombinationen erfolgte bisher durch den Vergleich mit dem besten verfügbaren Sensor als Referenz, was jedoch systematische Fehler unentdeckt lassen kann.

Diese herkömmlichen Verfahren zum Bewerten und Vergleich der Genauigkeit von Perception-Map-Fusion-Techniken bewerten das Ergebnis einer Perception-Map-Fusion jedoch nicht direkt und sind nicht von GNSS-Messungen unbhängig.

Daher besteht ein Bedarf an verbesserten Lösungen für die Bewertung und Optimierung von Perception-Map-Fusion-Systemen in Fahrzeugen, die die genannten Nachteile abmildern oder überwinden.

### ZUSAMMENFASSUNG DER ERFINDUNG

Diese Aufgabe wird mit den Merkmalen der unabhängigen Ansprüche gelöst. In den abhängigen Ansprüchen sind weitere vorteilhafte Ausführungsbeispiele beschrieben.

Im Folgenden werden die Techniken entsprechend der vorliegenden Offenbarung in Bezug auf die beanspruchten Verfahren für Fahrzeug-Lokalisierungssysteme, sowie auf die beanspruchten Lokalisierungssysteme und Fahrzeuge basierend auf Perception-Map-Fusion beschrieben. Merkmale, Vorteile oder alternative Ausführungsbeispiele können den jeweils anderen Kategorien zugeordnet werden, und umgekehrt. In anderen Worten, die Ansprüche für die Lokalisierungssysteme und Fahrzeuge können durch Merkmale verbessert werden, die im Rahmen der Verfahren beschrieben sind, und umgekehrt.

Ein Aspekt der vorliegenden Offenbarung bezieht sich auf ein Verfahren für die Umgebungswahrnehmung eines Fahrzeugs. Insbesondere auf ein Verfahren für die Bewertung der Genauigkeit eines Fahrzeug-Lokalisierungssystems unter Verwenden einer Perception-Map-Fusion-Technik, d.h. einer Technik zur Fusion von Daten aus digitalen Karten mit Daten von Umgebungssensoren.

In einem Schritt werden Kartendaten bereitgestellt, die eine Umgebung des Fahrzeugs repräsentieren. Kartendaten können eine digitale Repräsentation der Umgebung und der darin enthaltenen Umgebungselemente des Fahrzeugs umfassen. Die Kartendaten können beispiels Informationen über Straßen, Gebäude, Landmarken und deren Lokalisierung enthalten.

In einem weiteren Schritt werden Umgebungswahrnehmungsdaten mittels zumindest eines Umgebungssensors des Fahrzeugs erfasst, wobei die Umgebungswahrnehmungsdaten Informationen über zumindest ein Umgebungselement in einer Umgebung des Fahrzeugs enthalten, d.h. dieses Umgebungselement bestimmen. Ein Umgebungssensor kann an Bord des Fahrzeugs, oder allgemeiner in der Nähe des Fahrzeugs, angeordnet sein, und Informationen der Umgebung erfassen, die ein oder mehrere Umgebungselemente des Fahrzeugs repräsentieren. Diese Umgebungswahrnehmungsdaten können beispielsweise Merkmale und/oder Eigenschaften von Umgebungselementen enthalten oder repräsentieren.

In einem weiteren Schritt werden die Umgebungswahrnehmungsdaten und die Kartendaten kombiniert (fusioniert), in anderen Worten in eine gemeinsame Repräsenation der Fahrzeugumgebung integriert, um Lokalisierungsdaten des zumindest einen Umgebungselements in einem gemeinsamen Koordinatensystem zu bestimmen. Dieser Prozess kann als als Perception-Map-Fusion bezeichnet werden. In dem gemeinsamen Koordinatensystem können die Umgebungselemente und Kartenelemente gemeinsam dargestellt werden. Dies ermöglicht beispielsweise, eine räumliche Relation zwischen Umgebungselementen und Kartenelementen darzustellen oder zu bestimmen.

In einem weiteren Schritt werden Referenzlokalisierungsdaten des zumindest einen Umgebungselements in dem gemeinsamen Koordinatensystem bestimmt. Die Referenzlokalisierungsdaten können als wahre Lokalisierungsdaten verstanden werden. Die Referenzlokalisierungsdaten können somit als Grundwahrheit dienen, gegen die die durch Perception-Map-Fusion ermittelten Lokalisierungsdaten verglichen werden. Die Referenzlokalisierungsdaten können basierend auf den Umgebungswahrnehmungsdaten des zumindest einen Umgebungssensors und/oder weiteren Umgebungswahrnehmungsdaten mindestens eines weiteren Umgebungssensors des Fahrzeugs bestimmt werden.

In einem weiteren Schritt wird eine Abweichung zwischen den Lokalisierungsdaten und den Referenzlokalisierungsdaten bestimmt. Diese Abweichung kann als Metrik für die Systemgenauigkeit des Lokalisierungsystems, d.h. für die Genauigkeit der Fusion von Kartendaten und Umgebungswahrnehmungsdaten (Perception-Map-Fusion), dienen.

Durch die Bestimmung der Abweichung zwischen den Lokalisierungsdaten und den Referenzlokalisierungsdaten wird eine direkte quantitative Bewertung der Genauigkeit der Fusion von Wahrnehmungs- und Kartendaten ermöglicht. Diese direkte Metrik kann in Verfahren zur Bewertung einer Systemgenauigkeit eines Fahrzeug-Lokalisierungssystems, z.B. in Benchmarking-Verfahren eingesetzt werden, die unabhängig von satelliten-basierten Navigationssystemen arbeiten können. Die Verwendung von Referenzlokalisierungsdaten, die unabhängig von satelliten-basierten Navigationssystemen bestimmt werden, kann präzisere Evaluierung und Benchmarking von Lokalisierungs- und/oder Umgebungswahrnehmungssystemen ermöglichen, insbesondere in Situationen oder Umgebungen, in denen GNSS-Signale unzuverlässig oder nicht verfügbar sind.

Ein weiterer Aspekt der vorliegenden Offenbarung bezieht sich auf ein Fahrzeug-Lokalisierungssystem und/oder ein Umgebungswahrnehmungssystems eines Fahrzeugs, konfiguriert zur Durchführung einer Perception-Map-Fusion-Technik.

Das System umfasst mindestens einen Umgebungssensor zur Erfassung von Umgebungswahrnehmungsdaten, einen Speicher umfassend Kartendaten einer Umgebung des Fahrzeugs, einen Prozessor, und einen Speicher mit darauf gespeicherten Anweisungen, die bei Ausführung durch den Prozessor das System veranlassen, ein beliebiges Verfahren oder eine beliebige Kombination von Verfahren gemäß der vorliegenden Offenbarung auszuführen.

Ein weiterer Aspekt der vorliegenden Offenbarung bezieht sich auf Fahrzeug umfassend ein System zur Umgebungswahrnehmung eines Fahrzeug gemäß der vorliegenden Offenbarung.

Obwohl die in der obigen Zusammenfassung und der folgenden detaillierten Beschreibung beschriebenen Merkmale im Zusammenhang mit spezifischen Beispielen beschrieben werden, ist zu verstehen, dass die Merkmale nicht nur in den jeweiligen Kombinationen verwendet werden können, sondern auch isoliert oder in beliebigen Kombinationen verwendet werden können, und Merkmale aus verschiedenen Beispielen miteinander kombiniert werden können und somit miteinander korrelieren, sofern nicht ausdrücklich anders angegeben.

Die obige Zusammenfassung soll daher nur einen kurzen Überblick über einige Merkmale einiger Ausführungsbeispiele und Implementierungen geben und ist nicht als Einschränkung zu verstehen. Andere Ausführungsformen können weitere als die oben beschriebenen Merkmale umfassen.

### KURZE BESCHREIBUNG DER ZEICHNUNGEN

Die Techniken entsprechender vorliegenden Offenbarung werden nachfolgend anhand bevorzugter Ausführungsbeispiele mit Bezug auf die beiliegenden Zeichnungen näher erläutert.

Dabei bezeichnen in den Figuren gleiche Bezugszeichen gleiche oder ähnliche Elemente. Die Figuren sind schematische Darstellungen verschiedener Ausführungsbeispiele, wobei die in den Figuren dargestellten Elemente nicht notwendigerweise maßstabsgetreu dargestellt sind. Vielmehr sind die verschiedenen in den Figuren dargestellten Elemente derart wiedergegeben, dass ihre Funktion und genereller Zweck für den Fachmann verständlich wird.
- FIG. 1: illustriert schematisch eine kinematische Kette für Perception-Map-Fusion-Techniken, gemäß einigen Beispielen.
- FIG. 2: illustriert schematisch eine Metrik für Perception-Map-Fusion-Techniken, gemäß einigen Beispielen.
- FIG.: 3 zeigt schematisch eine kombinierte Umgebungsrepräsentation, gemäß einigen Beispielen.
- FIG.: 4 illustriert schematisch Verfahrensschritte zur Evaluation von Perception-Map-Fusion-Techniken, gemäß einigen Beispielen.
- FIG. 5: illustriert schematisch ein Fahrzeug-Lokalisationssystem, mit dem die Techniken gemäß der vorliegenden Offenbarung ausgeführt werden können.

### DETAILLIERTE BESCHREIBUNG

Die oben beschriebenen Eigenschaften, Merkmale und Vorteile der offenbartenTechniken sowie die Art und Weise, wie diese erreicht werden, werden klarer und deutlicher verständlich im Zusammenhang mit der folgenden Beschreibung von Ausführungsbeispielen, welche im Zusammenhang mit den Figuren näher erläutert werden.

Dabei ist zu beachten, dass die Beschreibung der Ausführungsbeispiele nicht in einem beschränkenden Sinne zu verstehen ist. Der Umfang der offenbarten Techniken soll nicht durch die im Folgenden beschriebenen Ausführungsbeispiele oder durch die Figuren eingeschränkt werden, welche nur zur Veranschaulichung dienen.

Nachfolgend werden verschiedene Techniken für Fahrzeug-Lokalisierungssysteme beschrieben, welche durch ein Fahrzeug-Lokalisierungssystem, beispielsweise in einem automatisierten Schienenfahrzeug, ausgeführt werden können. Die Techniken ermöglichen eine Bewertung der Systemgenauigkeit eines Perception-Map-Fusion-Systems und ermöglicht damit Optimierung und Validierung von Lokalisierungs- und Navigationssystemen in Fahrzeugen.

Es ist zu verstehen, dass die offenbarten Techniken, die im Zusammenhang mit Schienenfahrzeugen beschrieben werden, in verschiedenen anderen Arten von Fahrzeugen oder beweglichen Systemen eingesetzt werden können, in welchen eine präzise Lokalisierung und Umgebungswahrnehmung erforderlich ist.

Perception-Map-Fusion bezieht sich auf Techniken, in denen im Allgemeinen Informationen aus einer digitalen Karte mit Informationen aus einem oder mehreren Wahrnehmungssensoren fusioniert werden. Eine derartige Fusion erfordert eine Registrierung des Wahrnehmungskoordinatensystems und des Kartenkoordinatensystems, so dass die Informationen in einem gemeinsamen Koordiantensystem dargestellt werden können. Die aus dem Wahrnehmungssystem gewonnenen Informationen müssen in die Karte transformiert werden, oder umgekehrt. Beispielsweise kann bei einem Hinderniserkennungs- und -handhabungssystem für Schienenfahrzeuge die Karte verwendet werden, um zu entscheiden, ob sich ein erkanntes Objekt auf oder neben den Gleisen befindet. Eine ungenaue Lokalisierung führt zu einer ungenauen Vorhersage der Gleistrajektorie relativ zum Fahrzeug, was sowohl zu falschen positiven Erkennungen als auch zu (potenziell schädlichen) fehlenden Erkennungen führt.

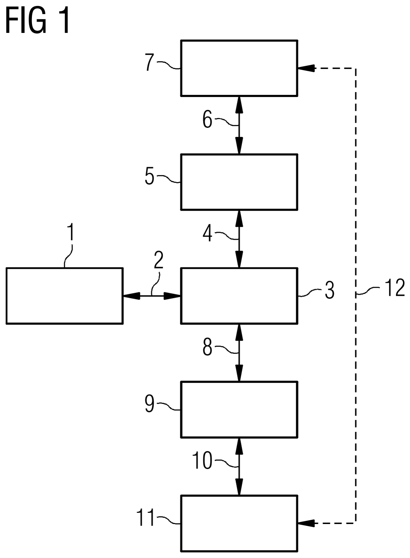

FIG. 1 zeigt schematisch eine kinematische Kette für Perception-Map-Fusion-Techniken, gemäß einigen Beispielen.

Wie in FIG. 1 zu sehen, umfasst Perception-Map-Techniken eines Fahrzeugs 1 eine Vielzahl einzelner Schritte, die als kinematische Kette (Transformationskette) beschrieben werden können.

Das Fahrzeug 1, beispielsweise ein Bogie, in der reellen Welt, ist über ein Bewegungsmodell 2 durch ein Fahrzeugmodell 3 repräsentiert.

Von dem Fahrzeugmodell 3 nach oben wird die Lokalisierung des Fahrzeugs beschrieben. Das Fahrzeugmodell steht durch eine Geo-Lokalisierung 4 in einer definierten räumlichen Beziehung zur Welt 5, d.h. der realen physische Umgebung des Fahrzeugs. Die Welt 5 wiederum ist über die Kartenreferenz 6 mit der digitalen Karte 7 verknüpft. Die digitale Karte 7 umfasst Kartendaten, die die Umgebung einschließlich Umgebungselemente, beispielsweise Objekte in der Umgebung, des Fahrzeugs repräsentieren. Diese Lokalisierungskette ermöglicht die absolute Lokalisierung des Fahrzeugs in der Karte, d.h. in einem Kartenkoordinatensystem wie beispielsweise einem globalen Koordinatensystem.

Von dem Fahrzeugmodell 3 nach unten wird die Umgebungswahrnehmung beschrieben. Mindestens ein Umgebungssensor 9 des Fahrzeugs erfasst Umgebungswahrnehmungsdaten einer Umgebung des Fahrzeugs 1, wobei die Umgebungswahrnehmungsdaten zumindest ein Umgebungselement (Objekt) in einer Umgebung des Fahrzeugs repräsentieren oder bestimmen.

Der Umgebungssensor 9 ist dabei über die extrinsische Kalibrierung 8 mit dem Fahrzeug verbunden, wodurch die räumliche Beziehung zwischen Sensor und Fahrzeug definiert wird. Der Umgebungssensor ist über die intrinsische Kalibrierung 10 mit der Wahrnehmung 11 verbunden. Diese intrinsische Kalibrierung beschreibt dabei die internen Parameter des Sensors, die für eine Interpretation der Sensordaten notwendig sind.

Ein derartiger Umgebungssensor kann beispielsweise einen LIDAR-Sensor, oder einen Frequency Modulated Continuous Wave- (FMCW-) LIDAR-Sensor, oder eine 2D Kamera unter Verwenden einer Structure-from-Motion- (SfM-) Technik, oder einen Stereokamera-Sensor, oder einen Time-of-Flight-Kamera-Sensor, oder einen Strukturiertes-Licht-Sensor, oder einen RADAR-Sensor umfassen, wobei auch weitere Sensoren bekannt sind, die 3D-Strukturen einer Fahrzeugumgebung erfassen können.

Hier sind ein paar Sätze zur Beschreibung des FMCW-LiDAR-Sensors auf Deutsch:
Ein FMCW-LiDAR-Sensor (Frequency Modulated Continuous Wave) verwendet eine kontinuierliche, frequenzmodulierte Laserwelle zur Vermessung von 3D-Strukturen der Umwelt. Durch die lineare oder dreieckförmige Modulation der Laserfrequenz über die Zeit kann die Laufzeit der reflektierten Signale und somit die Distanz zum Zielobjekt bestimmt werden. Im Gegensatz zu gepulsten LiDAR-Systemen ermöglicht der Einsatz einer kontinuierlichen Welle ein besseres Signal-Rausch-Verhältnis und eine höhere Entfernungsauflösung im Millimeter- bis Zentimeterbereich.

Ein wesentlicher Vorteil des FMCW-LiDAR-Sensors besteht darin, dass er analog zu einem RADAR-Sensor auch die Geschwindigkeit von sich bewegenden Objekten in der Umwelt des Fahrzeugs erfassen kann. Aufgrund der hohen Präzision bei der Abstands- und Geschwindigkeitsmessung und der Möglichkeit, sich bewegende Objekte zu vermessen, eignet sich FMCW-LiDAR besonders für Anwendungen für Llokalisations- und Wahrnehmumngsssysteme von Fahrzeugen.

Die kinematischen Kette zeigt durch die gestrichelte Linie 12 eine Perception-Map-Fusion, d.h. ein Kombinieren, oder eine Fusion, der Karte (Kartenelemente) mit den Wahrnehmung (Umgebungselemente). Das Fusionieren umfasst ein Kombinieren der Umgebungswahrnehmungsdaten und der Kartendaten in einem gemeinsamen Koordinatensystem, um Lokalisierungsdaten des zumindest einen Umgebungselements (geschätzte Objektposition) in dem gemeinsamen Koordinatensystem zu bestimmen. Durch das Kombinieren werden die Umgebungswahrnehmungsdaten und die Kartendaten zum Ziel einer Darstellung zumindest eines Kartenelements der Kartendaten und des zumindest einen Umgebungselements in einer gemeinsamen Repräsentation der Fahrzeugumgebung zusammengeführt. Durch diese Fusion von Sensordaten mit der digitalen Karteninformation wird eine Interpretation der Fahrzeugumgebung basierend sowohl auf den Kartendaten als auch auf den Umgebungswahrnehmungsdaten ermöglicht.

Jede dieser Transformationen 4,6,8,10 in der kinematischen Kette stellt eine potenzielle Fehlerquelle dar, weshalb die Gesamtgenauigkeit des Systems von der Präzision jeder einzelnen Transformation abhängt. Traditionelle Evaluierungsmethoden betrachten die einzelnen Transformationen oft isoliert, und berücksichtigen die systemischen Zusammenhänge nicht ausreichend.

Eine wichtige Komponente dieser kinematischen Kette ist die Geo-Lokalisierung. Üblicherweise wird die Geo-Lokalisierung durch Fusion mehrerer Sensoren durchgeführt, wobei meist satellitengestützte Lokalisierung (=GNSS) als einzige absolute Positionsreferenz verwendet wird. Obwohl GNSS nicht die einzige Option zur Bereitstellung absoluter Positionsschätzungen ist, wird sie oft eingesetzt. Sie ist (mit Ausnahme optionaler Korrektursignale) unabhängig von der Infrastruktur und liefert eine größtenteils kontinuierliche Positionsschätzung. Mit zwei verschiedenen Antennen ist es auch möglich, die Ausrichtung des Fahrzeugs zu schätzen. Alternativ werden inertiale Messeinheiten (=IMU) verwendet, um eine Orientierung zu liefern. Oft wird zur Bewertung der Leistung dieser GNSS-IMU-Kombinationen der beste verfügbare Sensor als Referenz verwendet, um alle anderen Sensoren damit zu vergleichen. Dies hat den Nachteil, dass nur Sensoren basierend auf der gleichen Messtechnologie bewertet wurden. Infolgedessen gibt es systematische Fehler, die durch einen direkten Vergleich nicht erkannt werden können.

Weiterhin definieren hekömmliche Techniken individuelle Anforderungen für jede einzelne Transformation in der Transformationskette, und überprüfen diese Anforderungen für jede Transformation separat. Bezüglich der Spezifikation der Genauigkeit einzelner Transformationen in der Transformationskette existieren spezifische Metriken für die einzelnen Transformationen. Im Kontext der Lokalisierung ist die gängigste Methode zur Spezifikation der Genauigkeit die Differenz zwischen dem wahren und dem gemessenen Wert. Im Fall der Position entspricht dies dem Abstand zwischen dem wahren und dem gemessenen Standort. Bei der Orientierung wird der Winkelabstand für jede Rotationskomponente betrachtet. Die Kartengenauigkeit kann ebenfalls auf diese Weise spezifiziert werden. Im Fall der intrinsischen und extrinsischen Kalibrierung gibt es keine einheitliche Methode, ihre Genauigkeit im Fall der Perception-Map-Fusion zu beschreiben, da die Auswirkungen von Kalibrierungsfehlern unterschiedliche Effekte auf die gesamte Perception-Map-Fusion haben.

Bezüglich des Benchmarkings werden alle spezifizierten Genauigkeitsanforderungen separat überprüft. Für die Kartengenauigkeit werden sogenannte Bodenkontrollpunkte (GCP) verwendet. GCP sind Punkte in der Karte, die individuell mit hoher Genauigkeit unter Verwendung spezialisierter Ausrüstung geortet wurden. Die Genauigkeit der extrinsischen und intrinsischen Kalibrierung wird üblicherweise mit Kalibrierungsverfahren getestet, beispielsweise durch die Verwendung spezieller Markierungen, die dem Wahrnehmungssystem zusammen mit spezialisierten Algorithmen zur Ableitung der Kalibrierung gezeigt werden. Herkömmlich wird ein weiteres, besseres Lokalisierungssystem als Referenz verwendet. In den meisten Fällen wird ein spezialisiertes GNSS-basiertes System verwendet, das zusätzlich mit Korrektursignalen (RTK, Real-Time-Kinematic) gespeist wird. Diese spezialisierte Hardware wird im Fahrzeug neben dem getesteten System installiert, Messungen werden von beiden vorgenommen und anschließend verglichen. Wie oben erwähnt, besteht das Hauptproblem hier in der Verwendung und dem Vergleich des gleichen Messprinzips, nämlich der satellitengestützten Lokalisierung. Es können systematische Fehler sowohl im Referenz- als auch im gemessenen System vorhanden sein, beispielsweise schlechte Lokalisierungsschätzungen aufgrund von Satellitensignalen, die an Gebäuden reflektiert werden. In GNSS-verweigerten Bereichen wie Innenszenarien oder Tunneln werden wahrscheinlich beide Systeme versagen. Ein alternativer Ansatz besteht darin, infrastrukturseitige Sensoren zu verwenden. Es ist möglich, die Infrastruktur beispielsweise mit Lichtschranken oder Laserscannern auszustatten, die dann zur Schätzung der Fahrzeugposition verwendet werden können. Die größte Einschränkung hierbei ist, dass diese Methoden nicht skalierbar sind, da es kostspielig ist, einen großen Teil der Infrastruktur auszustatten.

Daher zum einen ein Mangel an Metriken, die die Anforderung an das Ergebnis des Perception-Map-Fusion direkt beschreiben, sowie fehlende Benchmarking-Verfahren, die unabhängig von GNSS-Systemen sind.

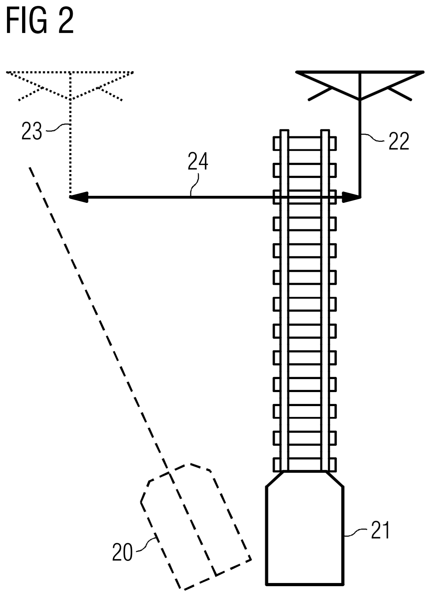

FIG. 2 zeigt schematisch eine Metrik für Perception-Map-Fusion-Techniken, gemäß einigen Beispielen.

Die Aufgabe von Perception-Map-Fusion-Techniken besteht darin, basierend auf der Fahrzeugpose und einer Karte eine Schätzung darüber zu liefern, wie die wahre Umgebung für die Umgebungssensoren aussieht. Die Genauigkeit dieser Schätzung kann direkt gemessen werden, indem der Abstand zwischen Umgebungselementen in der realen Welt und ihren geschätzten Gegenstücken spezifiziert wird. Damit ist es möglich, eine obere Fehlergrenze für den Abstand zwischen Schätzung und Realität zu definieren.

Wie in FIG. 2 zu sehen, befindet sich ein Fahrzeug, beispielsweise ein Schienenfahrzeug, in einer Fahrzeugumgebung. Die Fahrzeugumgebung umfasst Gleise und ein Objekt, wie beispielsweise einen Oberleitungsmast. Der Oberleitungsmast ist somit ein Beispiel für ein Umgebungselement, das vom Fahrzeug wahrgenommen wird, jedoch sind beliebige andere Objekte denkbar. Die wahre Position und Orientierung, d.h. die wahre Fahrzeugose 21, des Fahrzeugs ist in Relation zur der wahren Position 22 des Oberleitungsmasts gezeigt.

Mit gestrichelten Linien sind die vom Fahrzeug geschätzte eigene Fahrzeugposition und Orientierung (geschätzte Fahrzeugpose) 20 und basierend darauf eine durch Perception-Map-Fusion bestimmte, geschätzte Position 23 des Oberleitungsmasts (geschätzte Objektposition) in dem Kartenkoordinatensystem abgebildet. Die geschätzte Objektposition 23 entspricht in diesem Fall den Lokalisierungsdaten des Umgebungselements. Die gemeinsame Repräsentation basiert auf dem Kartenkoordinatensytem als gemeinsames Koordinatensystem, es ist jedoch denkbar, ein beliebiges anderes Koordinatensystem als gemeinsames Koordinatensystem zu wählen. Beispielsweise könnten auch die Kartenelemente in einem Kordinatensystem des Wahrnehmungssystems integriert werden.

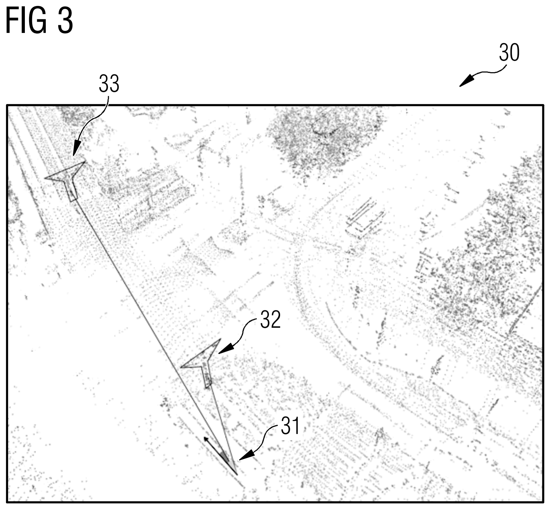

Die wahre Objektposition 22 kann somit als Referenz (als Referenzlokalisierungsdaten) zur Bewertung der Genauigkeit der geschätze Objektposition 23 verwendet werden. Diese wahre Objektposition kann beispielsweise basierend auf den Umgebungswahrnehmumgsdaten bestimmt werden, wie im Zusammenhang mit FIG. 3 genauer erklärt wird.

Um die Systemgenauigkeit evaluieren, wird die wahre Position 22 des Oberleitungsmasts in dem gemeinsamen Koordinatensystem, in diesem Beispiel das globale Koordinatensystem, mit der geschätzten Objektposition 23 verglichen. Konkret im Bespiel der FIG. 2 wird eine Abweichung 24 zwischen den Lokalisierungsdaten des zumindest einen Umgebungselements 23 und den Referenzlokalisierungsdaten 22 bestimmt. Diese kann als Kriterium zur Bewertung der Genauigkeit der Perception-Map-Fusion verwendet werden. Es wäre auch entsprechend weitere Umgebungselemente zur Bewertung heranzuziehen, oder beispielsweise Abstände zwischen zwei Umgebungselementen relativ zueinander zu verwenden. Auch absolute oder relative Orientierungen von Umgebungselementen wären denkbar.

Es wird beispielsweise ein Schwellenwert für eine maximal zulässige Abweichung zwischen den Lokalisierungsdaten und den Referenzlokalisierungsdaten festgelegt, wobei die bestimmte Abweichung mit dem Schwellenwert verglichen wird, um eine Fehlermetrik basierend auf der bestimmten Abweichung zu bestimmen. Die Fehlermetrik quantifiziert somit die Genauigkeit des Perception-Map-Fusion-Verfahrens bzw. -Systems.

Anstatt einzelne Anforderungen für individuelle Transformationen in FIG. 1 zu spezifizieren, wird also die erforderliche Genauigkeit als Anforderung für das Ergebnis der Perception-Map-Fusion selbst spezifiziert. Diese Art der Anforderungsspezifikation ist lösungsoffen und erlaubt beliebige Transformationspfade.

Um diese neu definierte Metrik zu messen, die unabhängig von der kinematischen Kette ist, ist es ratsam, eine Messtechnik zu haben, die ebenfalls unabhängig ist. Beispielsweise kann das Bestimmen von Referenzlokalisierungsdaten zumindest teilweise basierend auf den Umgebungswahrnehmungsdaten des zumindest einen Fahrzeugsensors durchgeführt werden, wie im Folgenden beschrieben wird.

Im Folgenden wird eine GNSS-freie Messtechnik beschrieben, die die zur Bestimmung der Referenzlokalisierungsdaten verwendet werden kann. Sie basiert auf Umgebungswahrnehmungsdaten, speziell LIDAR-Punktwolken. Das Erfassen der Umgebungswahrnehmungsdaten kann ein sequenzielles Erfassen von Umgebungsabschnittsdatensätzen an unterschiedlichen Fahrzeugpositionen während einer Fortbewegung des Fahrzeugs umfassen, welche jeweils unterschiedliche, teilweise überlappende Umgebungsabschnitte repräsentieren. Diese Umgebungswahrnehmungsdaten, insbesondere die Umgebungsabschnittsdatensätze, können dreidimensionale Punktwolken umfassen, die eine 3D-Struktur der Umgebung abbilden.

Eine kombinierte Umgebungsrepräsentation kann durch ein Zusammenfügen und Ausrichten (Stitching) der einzelnen Umgebungsabschnittsdatensätze zueinander basierend auf den Überlappungen der Umgebungsabschnittsdatensätze generiert werden. Anschließend können die Überlappungen der Umgebungsabschnittsdatensätze entfernt werden. Die kombinierte Umgebungsrepräsentation kann somit eine einzige, kohärente dreidimensionale Punktwolke umfassen.

Im Beispiel der FIG. 3, erfasst der LIDAR-Sensor für jeden Frame eine Punktwolke der Fahrzeugumgebung (Scan). Jede Punktwolke repräsentiert somit einen anderen Umgebungsabschnitt, aufgenommenn an einer anderen Fahrzeugposition während sich das Fahrzeug durch die Umgebung bewegt, wobei sich einzelne Umgebungsabschnitte überlappen können. Diese einzelnen sequenziellen Scans können in einer großen kombinierten Punktwolke als kombinierte Umgebungsrepräsentation zusammengeführt werden, die die gesamte Szene repräsentiert. Dies kann durch einen "Stitching" genannten Prozess durchgeführt werden, wobei die Beziehung zwischen zwei Punktwolken geschätzt wird, indem sie zusammengeführt werden und die Transformation geschätzt wird, die ein Abstandsmaß zwischen einer Menge von Punktpaaren reduziert. Wenn dies mit jede durchgeführten Scan durchgeführt wird, ist das Ergebnis eine Punktwolke, die die komplette Umgebung repräsentiert, durch die das Fahrzeug während der Messkampagne gefahren ist. **In** einigen Beispielen kann zumindest ein erweiterter Umgebungsabschnitt durch die erweiterte Umgebungsrepräsentation repräsentiert sein.

FIG. 3 zeigt schematisch eine kombinierte Umgebungsrepräsentation 30, gemäß einigen Beispielen.

Wie in FIG. 3 zu sehen, befindet sich ein Fahrzeug mit einer wahren Fahrzeugpose 31 in der kombinierten Umgebungsrepräsentation 30, die wahre Orientierung des Fahrzeugs ist durch einen Pfeil dargestellt. In der Umgebung des Fahrzeugs befinden sich zwei Oberleitungsmasten (Umgebungselemente), deren jeweilige wahre Positionen 32, 33 ebenfalls aus der kombinierten Umgebungsrepräsentation bestimmt werden können. Die wahren Positionen der Oberleitungsmasten 32,33 können als Referenzlokalisierungsdaten für die Oberleitungsmasten bestimmt werden.

Die kombinierte Umgebungsrepräsentation 30 ist daher eine gemeinsame Punktwolke, die sich aus den zueinander registrierten Punktwolken der einzelnen Scans zusammensetzt, und stimmt unter Verwendung fortgeschrittener Algorithmen wie Iterative Closest Point (ICP) mit der realen Umgebung überein. Über lange Distanzen können sich jedoch Stitching-Fehler anhäufen. Daher wird in einem optionalen Nachbearbeitungsschritt, die kombinierte Punktwolke verwendet, um spezifische Infrastrukturelemente mit bekannter realer Position zu erkennen, beispielsweise Obermasten mit bekannten Positionen 32, 31. Ihre wahre Geo-Position (in einem globalen Koordinatensystem) ist bekannt, z.B. aus Architekturzeichnungen oder Standards, sodass ein Optimierungsalgorithmus verwendet werden kann, um die durch das Stitching-Verfahren geschätzten Transformationen zu korrigieren. Zusätzlich kann die Verbindung zu wahren Geo-Positionen genutzt werden, um eine Geo-Referenz zu generieren, d.h. die Umrechnung zwischen lokalen Punktwolkenkoordinaten und dem globalen Koordinatensystem (Weltkoordinaten). Die georeferenzierte kombinierte Punktwolke stellt somit eine georeferenzierte Umgebungsrepräsentation dar und kann verwendet werden, um die Fahrzeugpose während jedes Scans zu bestimmen, und kann weiter verwendet werden, um Referenzlokalisierungsdaten für die Umgebungsobjekte (Oberleitungsmasten) zu bestimmen.

Die Erkennung von Infrastrukturelementen wird als absolute Referenz verwendet, um die Punktwolke zu korrigieren und zu geo-referenzieren. Alternativ oder zusätzlich kann optional ein GNSS-Signal verwendet. An diesem Punkt haben einzelne GNSS-Fehler keinen großen Einfluss auf die Gesamtlokalisierungsgenauigkeit, da die GNSS-Messungen verwendet werden, um die kombinierte Punktwolke im großen Maßstab zu korrigieren, während lokale Transformationen vom vergleichsweise präziseren Stitching-Algorithmus stammen. Daher können Verzerrungen in der kombinierten Umgebungsrepräsentation unter Verwenden von Daten eines GNSS-Empfängers korrigiert werden.

Beispielsweise kann eine robuste Least-Squares-Optimierung verwendet werden, um die zusammengesetzte Punktwolke nachzubearbeiten. In diesem Fall werden die Transformationen zwischen einzelnen Laser-Scans so verändert, dass der Abstand zwischen erkannten Infrastrukturelementen und ihren wahren Koordinaten minimiert wird.

Zusammenfassend wird also ein maximaler Abstand zwischen geschätzer und wahrer Umgebungselementposition als Qualitätskriterium definiert, durch LIDAR-Messungen werden Punktwolken erfasst und mittels ICP zusammengefügt und anschließend durch absolute Referenzen wie Infrastrukturelemente und GNSS-Messungen global optimiert. Dadurch wird eine eine georeferenzierte Umgebungsrepräsenation bereitgestellt, die präzisen Posenschätzungen für das Fahrzeug und die Umgebungselemente für jeden Messzeitpunkt ermöglicht. Insbesondere kann eine Geolokalisation des Fahrzeugs zu jedem Messzeitpunkt eines Scans aus der kombinierten Umgebnugsrepräsentation bestimmt werden, insbesondere eine Position und/oder Orientierung und/oder einer Pose des Fahrzeugs, unter Verwenden der georeferenzierten Umgebungsrepräsentation und zumindest einem Umgebungsabschnittdatensatz.

Es wäre auch möglich, anstelle eines statischen Umgebungselements (Oberleitungsmast) ein dynamisches (bewegliches) Umgebungselement, beispielsweise ein anderes Fahrzeug zu verwenden.

Die beschriebenen Techniken ermöglichen eine verbesserte Bewertung von Fahrzeug-Lokalisierungssystemen. Insbesondere wird durch den direkten Vergleich der geschätzten mit den tatsächlichen Positionen von Umgebungselementen eine präzise quantitative Bewertung der Perception-Map-Fusion-Techniken ermöglicht, welche unabhängig von GNSS-Systemen durchgeführt werden kann und somit auch in GNSS-schwachen Umgebungen wie Tunneln zuverlässig arbeitet. Das Verfahren bewertet die Gesamtleistung des Systems anstelle einzelner isolierter Komponenten und verwendet dabei eine durch Fusion von mehreren Umgebungssensormessungen und bekannte Infrastrukturelemente erstellte georeferenzierte Umgebungsrepräsentation als Grundwahrheit.

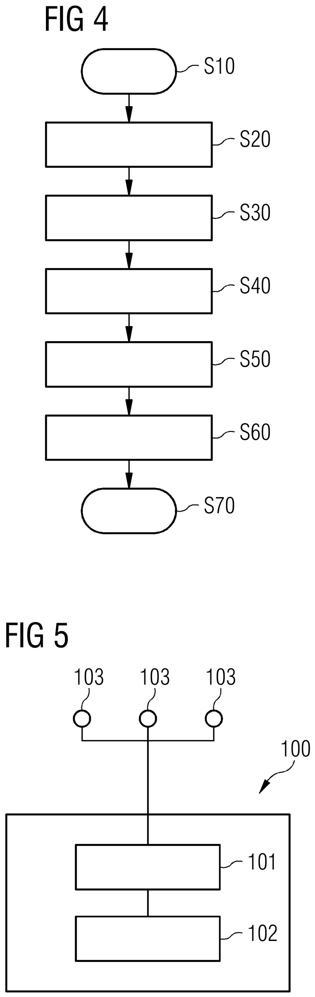

FIG. 4 zeigt schematisch Verfahrensschritte zur Bewertung von Perception-Map-Fusion-Techniken eines Fahrzeugs, gemäß einigen Beispielen.

Das Verfahren beginnt in Schritt S10. In Schritt S20 werden Kartendaten bereitgestellt, die eine Umgebung des Fahrzeugs repräsentieren. In Schritt S30 erfasst mindestens ein Umgebungssensor des Fahrzeugs Umgebungswahrnehmungsdaten, wobei diese Daten zumindest ein Umgebungselement in der Fahrzeugumgebung bestimmen. In Schritt S40 werden die Umgebungswahrnehmungsdaten mit den Kartendaten kombiniert, um Lokalisierungsdaten des mindestens einen Umgebungselements in einem gemeinsamen Koordinatensystem zu bestimmen. In Schritt S50 bestimmt werden Referenzlokalisierungsdaten des mindestens einen Umgebungselements in dem gemeinsamen Koordinatensystem bestimmt. In Schritt S60 wird eine Abweichung zwischen den Lokalisierungsdaten und den Referenzlokalisierungsdaten bestimmt, die als Metrik für die Genauigkeit des Verfahrens dienen kann. Das Verfahren endet in Schritt S70.

FIG. 5 zeigt schematisch ein Fahrzeug-Lokalisationssystem 100, mit dem die Techniken der vorliegenden Offenbarung ausgeführt werden können.

Das Fahrzeug-Lokalisationssystem 100 zur Umgebungswahrnehmung eines Fahrzeugs umfasst Umgebungssensoren 103 zur Erfassung von Umgebungswahrnehmungsdaten, einen Speicher 102 umfassend Kartendaten einer Umgebung des Fahrzeugs, einen Prozessor 101. Der Speicher 102 umfasst weiter Anweisungen, die bei Ausführung durch den Prozessor das System veranlassen, ein Verfahren oder eine beliebige Kombination von Verfahren entsprechen der vorliegenden Offenbarung auszuführen.

Daher lassen sich aus dem oben Gesagten einige allgemeine Schlussfolgerungen ziehen:
In verschiedenen Beispielen kann das Kombinieren der Umgebungswahrnehmungsdaten und der Kartendaten ein Zusammenführen, oder Integrieren, der Umgebungswahrnehmungsdaten und der Kartendaten zur Darstellung zumindest eines Kartenelements der Kartendaten und des zumindest einen Umgebungselements in einer gemeinsamen Repräsentation der Fahrzeugumgebung beinhalten, was auch als Perception-Map-Fusion bezeichnet werden kann. Dadurch kann eine integrierte Darstellung der Umgebung erzeugt werden, die sowohl die vom Fahrzeug wahrgenommenen Umgebungselemente als auch die in den Kartendaten repräsentierten Kartenelemente umfasst, und in einem gemeinsamen Koordinatensystem stattfindet.

Ein Kartenelement kann als eine in den digitalen Kartendaten enthaltene Einheit verstanden werden, die ein spezifisches Merkmal oder Objekt in der Umgebung repräsentiert. Ein Umgebungselement kann als ein vom Fahrzeugsensor erfasstes Objekt oder Merkmal in der realen Umgebung verstanden werden. Eine gemeinsame Repräsentation der Fahrzeugumgebung kann als eine einheitliche Darstellung verstanden werden, die Informationen aus verschiedenen Quellen in einem kohärenten Modell zusammenführt, und beispielsweise eine räumliche Relation der dargestellten Elemente zueinander bestimmt.

In verschiedenen Beispielen kann ein Schwellenwert für eine maximal zulässige Abweichung zwischen den Lokalisierungsdaten und den Referenzlokalisierungsdaten festgelegt werden. Die bestimmte Abweichung kann mit dem Schwellenwert verglichen werden. Eine Fehlermetrik kann basierend auf der bestimmten Abweichung berechnet werden, wobei die Fehlermetrik die Genauigkeit des Systems quantifiziert. Die Fehlermetrik kann als ein quantitatives Maß für die Genauigkeit der Fusion der Karten- und Umgebungsdaten, d.h. der Perception-Map-Technik verstanden werden.

In verschiedenen Beispielen kann das Bestimmen von Referenzlokalisierungsdaten zumindest teilweise basierend auf den Umgebungswahrnehmungsdaten des zumindest einen Fahrzeugsensors durchgeführt werden. Dadurch kann die wahre Position des zumindest einen Umgebungselements unabhängig von sattellitengestützten Navigationssystemen bestimmt werden.

In verschiedenen Beispielen kann das Erfassen der Umgebungswahrnehmungsdaten ein sequenzielles Erfassen von (vollständigen) Umgebungsabschnittsdatensätzen an jeweiligen unterschiedlichen Fahrzeugpositionen während einer Fortbewegung des Fahrzeugs beinhalten. Ein derartiger Umgebungsabschnittsdatensatz kann jeweils einen unterschiedlichen, teilweise mit einem anderen Umgebungsabschnittsdatensatz überlappenden Umgebungsabschnitt repräsentieren.

Umgebungsabschnittsdatensätze können somit als jeweilige diskrete Wahrnehmungen der Umgebung zu verschiedenen Zeitpunkten und/oder an verschiedenen Positionen verstanden werden. Überlappende Umgebungsabschnitte können als Bereiche verstanden werden, die in zwei oder mehr aufeinanderfolgenden Datensätzen erfasst werden.Ein Umgebungsabschnittsdatensatz kann somit eine jeweilite Position, und/oder Orientierung, und/oder Pose des Fahrzeugs zu dem Zeitpunkt repräsentieren.

In verschiedenen Beispielen kann ein Zusammenführen der mehreren Umgebungsabschnittsdatensätze zu einer kombinierten Umgebungsrepräsentation durchgeführt werden, die einen erweiterten Umgebungsabschnitt repräsentiert. Der erweiterte Umgebungsabschnitt kann mehrere einzeln wahrgenommene Umgebungsabschnitte umfassen. Die kombinierte Umgebungsrepräsentation kann als eine einheitliche Darstellung eines relativ größeren Umgebungsabschnitts verstanden werden, die Informationen aus mehreren einzelnen Umgebungsabschnittsdatensätzen integriert. Ein erweiterter Umgebungsabschnitt kann als zusammenhängender Bereich der Umgebung verstanden werden, der mehrere kleinere individuelle erfasste Umgebungsabschnitte umfasst.

In verschiedenen Beispielen können die Umgebungsabschnittsdatensätze jeweils eine dreidimensionale Punktwolke umfassen. Dadurch kann eine detaillierte und räumlich präzise Repräsentation der Umgebung ermöglicht werden. Dreidimensionale Punktwolken können als Sammlungen von Datenpunkten im dreidimensionalen Raum verstanden werden, die die Oberflächen von Objekten und Strukturen in der Umgebung repräsentieren.

In verschiedenen Beispielen können die Umgebungsabschnittsdatensätze durch einen oder eine Kombination der folgenden Fahrzeugsensoren erzeugt werden: einen LIDAR-Sensor, eine 2D-Kamera unter Verwenden einer Structure-from-Motion- (SfM-) Technik, einen Stereokamera-Sensor, einen Time-of-Flight-Kamera-Sensor, oder einen Strukturiertes-Licht-Sensor. Es ist zu verstehen, dass auch andere als die genannten Sensoren verwendet werden können, sowie auch mehrerer gleiche oder eine beliebige Untergruppe von verschiedenen Sensoren, beispielsweise unter Verwenden von Sensorfusion.

Ein LIDAR-Sensor kann als ein optischer Sensor verstanden werden, der Laserlicht verwendet, um Distanzen zu messen und 3D-Punktwolken zu erzeugen. Eine Structure-from-Motion-Technik kann als ein photogrammetrisches Verfahren verstanden werden, das aus 2D-Bildern 3D-Strukturen rekonstruiert. Ein Stereokamera-Sensor kann als ein System verstanden werden, das zwei Kameras verwendet, um Tiefeninformationen zu gewinnen. Ein Time-of-Flight-Kamera-Sensor kann als ein Gerät verstanden werden, das die Laufzeit von Lichtsignalen misst, um 3D-Strukturen zu bestimmen. Ein Strukturiertes-Licht-Sensor kann als ein System verstanden werden, das projizierte Lichtmuster verwendet, um 3D-Strukturen zu erfassen.

In verschiedenen Beispielen kann das Zusammenfügen ein Ausrichten der einzelnen Umgebungsabschnittsdatensätze zueinander basierend auf den Überlappungen der Umgebungsabschnittsdatensätze beinhalten. Dadurch kann eine präzise Integration der verschiedenen Datensätze zu einer kohärenten kombinierten Umgebungsrepräsentation ermöglicht werden.

In verschiedenen Beispielen kann das Zusammenfügen weiter ein Entfernen der Überlappungen der Umgebungsabschnittsdatensätze aus der kombinierten Umgebungsrepräsentation umfassen. Das Entfernen von Überlappungen kann als Prozess verstanden werden, bei dem redundante Informationen in den überlappenden Bereichen verschiedener Datensätze identifiziert und entfernt werden, um eine einheitliche und effiziente Darstellung zu erreichen. Dadurch kann eine nicht-redundante Repräsentation der Umgebung erzeugt werden.

In verschiedenen Beispielen kann die kombinierte Umgebungsrepräsentation eine einzige, kohärente dreidimensionale Punktwolke umfassen. Eine kohärente dreidimensionale Punktwolke kann als eine einheitliche Vielzahl von 3D-Datenpunkten verstanden werden, die zusammen eine vollständige und konsistente Repräsentation der Umgebung bilden, beispielsweise in einem gemeinsamen Koordinatensystem.

In verschiedenen Beispielen kann ein Korrigieren der kombinierten Umgebungsrepräsentation unter Verwenden von einem oder mehreren oder einer beliebigen Untergruppe oder Kombination der folgenden Elemente durchgeführt werden: einem Global-Navigation-Satellite-System- (GNSS-) Empfänger, der präzise globale Positionsinformationen liefert, Referenzpunkten mit bekannten Positionen, insbesondere Ground Control Points oder bekannten Landmarken, die als räumliche Ankerpunkte dienen, einer Referenzkarte, insbesondere einer Ground-Truth-Karte oder Bauplänen, die genaue Informationen über Umgebungselemente und deren absolute Positionen enthalten, und/oder einer Schätzung der Eigenbewegung des Fahrzeugs basierend auf Informationen von Sensoren, die eine Bewegung des Fahrzeugs oder eines Messpunktes erfassen, insbesondere Inertialsensoren, Odometriesensoren oder Umgebungssensoren des Fahrzeugs.

Dadurch können Verzerrungen, Ungenauigkeiten oder Inkonsistenzen in der kombinierten Umgebungsrepräsentation korrigiert werden. Beispielsweise kann die kombinierte Umgebungsrepräsentation unabhängig von GNSS-Sensoren korrigiert bzw. validiert werden. An dieser Stelle ist der Einsatz von GNSS jedoch unkritisch, da die GNSS-Messungen lediglich zur großräumigen Korrektur der kombinierten Punktwolke verwendet werden, während die lokalen Datenwerte von den vergleichsweise präziseren Sensorfusionsalgorithmen stammen.

Beispielsweise können das Korrigieren anhand von bekannten Referenzpunkten folgende Schritte umfassen. In einem Schritt können Lokalisierungsdaten zumindest eines bekannten Umgebungselements, beispielsweise eines Infrastrukturelements, innerhalb der kombinierten Umgebungsrepräsentation bestimmt werden, von dem die Position beispielsweise in absoluten Koordinaten, bekannt ist. Die kombinierte Umgebungsrepräsentation kann durch Minimieren eines Abstands zwischen den Lokalisierungsdaten des zumindest einen bekannten Umbegungselements und dessen bekannter realer Position (in einem absoluten Koordinatensystem) angepasst werden. Ein bekanntes Infrastrukturelement kann als ein in der realen Welt existierendes unbewegliches Objekt verstanden werden, dessen genaue Position bekannt ist und als Referenzpunkt dienen kann. Dadurch kann die Genauigkeit der Umgebungsrepräsentation verbessert werden, indem sie an bekannte Referenzpunkte in der realen Welt angepasst wird.

In verschiedenen Beispielen kann die kombinierte Umgebungsrepräsentation eine georeferenzierte Umgebungsrepräsentation umfassen. Eine georeferenzierte Umgebungsrepräsentation kann als eine Darstellung verstanden werden, bei der zumindest einige Punkte in der Umgebung mit präzisen geografischen Koordinaten verknüpft sind. Die georeferenzierte Umgebungsrepräsentation kann auf einem globalen Koordinatensystem basieren.

In verschiedenen Beispielen können die Referenzlokalisierungsdaten des zumindest einen Umgebungselements basierend auf Daten des zumindest einen Umgebungssensors und/oder eines weiteren Umgebungssensors, und/oder der kombinierten Umgebungsrepräsentation und/oder der georeferenzierten Umgebungsrepräsentation bestimmt werden. Somit können die Referenzlokalisierungsdaten unabhängig von einem GNSS-System bestimmt werden.

In verschiedenen Beispielen kann das zumindest eine Umgebungselement ein sich in der Umgebung des Fahrzeugs bewegendes Objekt sein. Ein sich bewegendes Objekt kann sich beispielsweise auf ein bewegliches (dynamisches) Umgebungselement beziehen. Dies ermöglicht die Erfassung und Verfolgung dynamischer Elemente in der Fahrzeugumgebung, wie beispielsweise andere Verkehrsteilnehmer oder bewegliche Hindernisse, die statische Umgebungselemente verdecken können. Das zumindest eine Umgebunselement kann ein statisches oder ein dynamisches Umgebungsobjekt sein. Es wäre aber auch denkbar, einen Messvergleich unter Verwenden von mehreren Umgebungselementen durchzuführen, die sowohl mindestens ein statisches und mindestens ein dynamisches Umgebungsobjekt enthalten. Dabei wäre es möglich die Umgebungsobjekte mit Faktoren unteschiedlich zu gewichten.

In verschiedenen Beispielen können die mehreren Umgebungsabschnittsdatensätze eine Information über eine zeitliche Veränderung der Position des sich bewegenden Objekts umfassen. Da die Umgebungsabschnittsdatensätze zu verschiedenen Zeitpunkten oder an verschiedenen Fahrzeugpositionen erfasst werden, enthalten sie Informationen über die Bewegung und Positionsänderung beweglicher (dynamischer) Objekte über die Zeit.

In verschiedenen Beispielen kann das Bestimmen der Referenzlokalisierungsdaten ein Bestimmen einer veränderten Position des sich bewegenden Objekts basierend auf den Umgebungsabschnittsdatensätzen und/oder Informationen mindestens eines Umgebungssensors, insbesondere eines RADAR-Sensors oder eines FMCW-LIDAR-Sensors, umfassen. Durch die Analyse der Positions- und Zeitinformationen in den aufeinanderfolgenden Umgebungsabschnittsdatensätzen kann die Bewegung und veränderte Position eines Objekts präzise bestimmt werden. Zusätzlich können spezialisierte Sensoren wie RADAR oder FMCW-LIDAR eingesetzt werden, die eine direkte Messung der Geschwindigkeit und Entfernung bewegter Objekte ermöglichen. Die Kombination dieser Informationen erlaubt eine genaue Schätzung der Referenzlokalisierungsdaten für dynamische Umgebungselemente. Dadurch können auch bewegliche Objekte zur Bewertung der Systemgenauigkeit der Fahrzeug-Lokalisation und der Wahrnehmungs-Karten-Fusion verwendet werden.

In verschiedenen Beispielen kann eine Geolokalisation des Fahrzeugs, insbesondere eine Position und/oder Orientierung und/oder eine Pose des Fahrzeugs, unter Verwenden der georeferenzierten Umgebungsrepräsentation und zumindest einem Umgebungsabschnittdatensatz bestimmt werden. Die Referenzlokalisierungsdaten können basierend zumindest teilweise auf der Geolokalisation des Fahrzeugs bestimmt werden. Geolokalisation kann als der Prozess verstanden werden, bei dem die genaue geografische Position eines Objekts oder Fahrzeugs in einem globalen Koordinatensystem bestimmt wird.

In verschiedenen Beispielen können die Lokalisierungsdaten und die Referenzlokalisierungsdaten eine oder mehrere der folgenden Informationen beinhalten: eine Position des zumindest einen Umgebungselements, eine Orientierung des zumindest einen Umgebungselements, eine Pose des zumindest einen Umgebungselements, oder einen Abstand des zumindest einen Umgebungselements zu mindestens einem weiteren Umgebungselement. Dadurch kann eine umfassende und vielseitige Charakterisierung der räumlichen Beziehungen und Eigenschaften von Umgebungselementen ermöglicht werden, was die Genauigkeit und Vollständigkeit der Umgebungswahrnehmung verbessern mag. Position kann als die räumlichen Koordinaten eines Objekts in einem definierten Referenzsystem verstanden werden. Orientierung kann als die Ausrichtung eines Objekts im Raum verstanden werden. Pose kann als die Kombination von Position und Orientierung verstanden werden. Der Abstand zwischen Umgebungselementen kann als die räumliche Distanz zwischen zwei oder mehr Objekten in der Umgebung verstanden werden.

Zusammenfassend wird dadurch eine quantitative Bewertung und ein Benchmarking von Perception-Map-Fusion-Systemen in Fahrzeugen, unabhängig von globalen Navigationssatellitensystemen (GNSS) ermöglicht. Durch die direkte Bestimmung einer Abweichung zwischen den durch Sensordatenfusion geschätzten Lokalisierungsdaten von Umgebungselementen und deren Referenzlokalisierungsdaten (wahre Lokalisierungsdaten) eines wahrgenommenen Umgebungsobjektes, die aus einer kombinierten Umgebungsrepräsentation basierend auf Umgebungssensoren abgeleitet werden, wird eine aussagekräftige Metrik für die Genauigkeit des Ergebnisses des Systems bereitgestellt.

Diese Metrik quantifiziert die Leistungsfähigkeit der Fusion in einer einzigen Kenngröße und ermöglicht somit einen objektiven Vergleich verschiedener Systemkonfigurationen und Algorithmen. Zudem erlaubt die GNSS-unabhängige Referenzierung der Umgebung die Evaluierung der Systeme auch in herausfordernden Umgebungen wie Tunneln oder städtischen Häuserschluchten, wo GNSS-Empfang oft eingeschränkt ist.

## Patentansprüche

1. Verfahren zur Umgebungswahrnehmung eines Fahrzeugs, umfassend:
- Bereitstellen von Kartendaten, die eine Umgebung des Fahrzeugs repräsentieren;
- Erfassen von Umgebungswahrnehmungsdaten mittels zumindest eines Umgebungssensors des Fahrzeugs, wobei die Umgebungswahrnehmungsdaten zumindest ein Umgebungselement in einer Umgebung des Fahrzeugs bestimmen;
- Kombinieren der Umgebungswahrnehmungsdaten und der Kartendaten, um Lokalisierungsdaten des zumindest einen Umgebungselements in einem gemeinsamen Koordinatensystem zu bestimmen;
- Bestimmen von Referenzlokalisierungsdaten des zumindest einen Umgebungselements in dem gemeinsamen Koordinatensystem;
- Bestimmen einer Abweichung zwischen den Lokalisierungsdaten und den Referenzlokalisierungsdaten.

2. Verfahren nach Anspruch 1,
wobei das Kombinieren der Umgebungswahrnehmungsdaten und der Kartendaten ein Zusammenführen der Umgebungswahrnehmungsdaten und der Kartendaten zur Darstellung zumindest eines Kartenelements der Kartendaten und des zumindest einen Umgebungselements in einer gemeinsamen Repräsentation der Fahrzeugumgebung umfasst.

3. Verfahren nach Anspruch 2, weiter umfassend:
- Festlegen eines Schwellenwerts für eine maximal zulässige Abweichung zwischen den Lokalisierungsdaten und den Referenzlokalisierungsdaten;
- Vergleichen der bestimmten Abweichung mit dem Schwellenwert; und
- Berechnen einer Fehlermetrik basierend auf der bestimmten Abweichung, wobei die Fehlermetrik die Genauigkeit der gemeinsamen Repräsentation der Fahrzeugumgebung quantifiziert.

4. Verfahren nach einem der vorhergehenden Ansprüche,
wobei das Bestimmen von Referenzlokalisierungsdaten zumindest teilweise basierend auf den Umgebungswahrnehmungsdaten des zumindest einen Fahrzeugsensors durchgeführt wird.

5. Verfahren nach einem der vorhergehenden Ansprüche,
wobei das Erfassen der Umgebungswahrnehmungsdaten ein sequenzielles Erfassen von Umgebungsabschnittsdatensätzen an unterschiedlichen Fahrzeugpositionen während einer Fortbewegung des Fahrzeugs umfasst, welche jeweils unterschiedliche, teilweise überlappende Umgebungsabschnitte repräsentieren.

6. Verfahren nach Anspruch 5,
weiter umfassend:
- Zusammenführen der mehreren Umgebungsabschnittsdatensätze zu einer kombinierten Umgebungsrepräsentation, die einen erweiterten Umgebungsabschnitt repräsentiert.

7. Verfahren nach Anspruch 6,
wobei die Umgebungsabschnittsdatensätze jeweils dreidimensionale Punktwolken umfassen.

8. Verfahren nach einem der Ansprüche 4 bis 7,
wobei die Umgebungsabschnittsdatensätze durch einen oder mehrere der folgenden Fahrzeugsensoren erzeugt werden:
a) einen LIDAR-Sensor;
b) einen Frequency Modulated Continuous Wave- (FMCW-) LIDAR-Sensor;
c) eine 2D-Kamera unter Verwenden einer Structure-from-Motion- (SfM-) Technik;
d) einen Stereokamera-Sensor;
e) einen Time-of-Flight-Kamera-Sensor;
f) einen Strukturiertes-Licht-Sensor
g) einen RADAR-Sensor.

9. Verfahren nach einem der Ansprüche 6 bis 8,
wobei das Zusammenfügen ein Ausrichten der einzelnen Umgebungsabschnittsdatensätze zueinander basierend auf den Überlappungen der Umgebungsabschnittsdatensätze umfasst.

10. Verfahren nach Anspruch 9,
wobei das Zusammenfügen weiter ein Entfernen der Überlappungen der Umgebungsabschnittsdatensätze umfasst.

11. Verfahren nach einem der Ansprüche 6 bis 10,
wobei die kombinierte Umgebungsrepräsentation eine einzige, kohärente dreidimensionale Punktwolke umfasst.

12. Verfahren nach einem der Ansprüche 6 bis 11,
weiter umfassend:
- Korrigieren der kombinierten Umgebungsrepräsentation unter Verwenden von einem oder mehreren der Folgenden:
a) zumindest einem Referenzpunkt mit bekannter Position, insbesondere einem Ground Control Point oder einer bekannten Landmarke;
b) einer Referenzkarte;
c) einer Schätzung der Eigenbewegung des Fahrzeugs basierend auf Informationen von Sensoren, die eine Bewegung des Fahrzeugs oder eines Messpunktes erfassen.

13. Verfahren nach Anspruch 12,
wobei das Korrigieren der kombinierten Umgebungsrepräsentation basierend auf dem Referenzpunkt mit bekannter Position umfasst:
- Bestimmen von Lokalisierungsdaten zumindest eines bekannten Infrastrukturelements innerhalb der kombinierten Umgebungsrepräsentation; und
- Anpassen der kombinierten Umgebungsrepräsentation durch Minimieren eines Abstands zwischen den Lokalisierungsdaten des zumindest einen bekannten Infrastrukturelements und dessen bekannter realer Position.

14. Verfahren nach Anspruch 12 oder 13,
wobei die kombinierte Umgebungsrepräsentation durch das Korrigieren eine georeferenzierte Umgebungsrepräsentation umfasst.

15. Verfahren nach einem der Ansprüche 6 bis 14,
wobei die Referenzlokalisierungsdaten des zumindest einen Umgebungselements basierend auf der kombinierten Umgebungsrepräsentation bestimmt werden.

16. Verfahren nach eine der Ansprüche 5 bis 15,
wobei das zumindest eine Umgebungselement ein sich in der Umgebung des Fahrzeugs bewegendes Objekt ist.

17. Verfahren nach Anspruch 16,
wobei die mehreren Umgebungsabschnittsdatensätze eine Information über eine zeitliche Veränderung der Position des sich bewegenden Objekts umfassen.

18. Verfahren nach Anspruch 16 oder 17,
wobei das Bestimmen der Referenzlokalisierungsdaten ein Bestimmen einer veränderten Position des sich bewegenden Objekts basierend auf den Umgebungsabschnittsdatensätzen und/oder Informationen mindestens eines Umgebungssensors, insbesondere eines RADAR-Sensors oder eines FMCW-LIDAR-Sensors, umfasst.

19. Verfahren nach einem der Ansprüche 6 bis 18,
weiter umfassend:
- Bestimmen einer Geolokalisation des Fahrzeugs, insbesondere einer Position und/oder Orientierung und/oder einer Pose des Fahrzeugs, unter Verwenden der kombinierten Umgebungsrepräsentation und zumindest einem Umgebungsabschnittdatensatz.

20. Verfahren nach einem der vorhergehenden Ansprüche,
wobei die Lokalisierungsdaten und die Referenzlokalisierungsdaten eine oder mehrere der folgenden Informationen umfassen:
a) eine Position des zumindest einen Umgebungselements;
b) eine Orientierung des zumindest einen Umgebungselements;
c) eine Pose des zumindest einen Umgebungselements;
d) einen Abstand des zumindest einen Umgebungselements zu mindestens einem weiteren Umgebungselement.

21. System zur Umgebungswahrnehmung eines Fahrzeugs, umfassend:
- mindestens einen Umgebungssensor zur Erfassung von Umgebungswahrnehmungsdaten;
- einen Prozessor; und
- einen Speicher umfassend Kartendaten einer Umgebung des Fahrzeugs und Anweisungen, die bei Ausführung durch den Prozessor das System veranlassen, das Verfahren nach einem der Ansprüche 1 bis 20 durchzuführen.
